# EUROPÄISCHE PATENTSCHRIFT

(11) **EP 4 253 903 B1**
(45) Veröffentlichungstag und Bekanntmachung des Hinweises auf die Patenterteilung: **14.08.2024**
(21) Anmeldenummer: 23192106.5
(22) Anmeldetag: 20.10.2022
(51) Int. Cl.: G01B 11/04, G01P 3/68, G01V 8/22, G01B 11/26

(54) **VERFAHREN ZUR VERMESSUNG VON OBJEKTEN**
METHOD FOR MEASURING OBJECTS
PROCÉDÉ DE MESURE D'OBJETS

(30) Priorität: 25.11.2021 DE 102021130870
(43) Veröffentlichungstag der Anmeldung: 04.10.2023
(62) Teilanmeldung aus: 22202743.5
(73) Patentinhaber: SICK AG, 79183 Waldkirch (DE)
(72) Erfinder: Hirt, Günter, 77790 Steinach (DE); Hauser, Lukas, 79108 Freiburg im Breisgau (DE); Hauser, Clemens, 79312 Emmendingen (DE)
(74) Vertreter: Manitz Finsterwald Patent- und Rechtsanwaltspartnerschaft mbB

(56) Entgegenhaltungen:
- DE-A1- 102019 100 661
- DE-U1- 20 218 187
- DE-U1- 202008 018 457
- JP-A- 2010 002 319

## Beschreibung

Die Erfindung betrifft Verfahren zur Vermessung von Objekten, die mittels eines Objektförderers in einer Förderrichtung gefördert werden.

In verschiedenen Bereichen der Industrie ist es gewünscht, geförderte Objekte wie zum Beispiel Werkstücke, Zwischenprodukte oder Endprodukte ohne Unterbrechung des Fördervorgangs zu vermessen. Die zum Fördern verwendeten Objektförderer werden häufig mit relativ hohen Geschwindigkeiten, z. B. mehrere Meter pro Sekunde, betrieben. Weiterhin herrschen an Objektförderern oft raue und wechselnde Umgebungsbedingungen. Ebenso können die geförderten Objekte unterschiedliche Oberflächen aufweisen. Zudem kann eine korrekte Lage der Objekte nicht immer gewährleistet werden. Demgemäß ist es in der Praxis schwierig, während des Fördervorgangs eine Vermessung von Objekten mit hoher Messgenauigkeit durchzuführen.

Die DE 10 2019 100661 A1 offenbart eine Vermessungsvorrichtung für Werkstoffplatten, die mit mehreren Erfassungseinheiten zum Erzeugen von Erfassungssignalen versehen ist.

In der JP 2010 002319 A ist eine Vorrichtung offenbart, die einen Sensor zum Erfassen einer Objektkante aufweist und beim Erfassen der Objektkante ein Signal an weitere, ortsauflösende Sensoren ausgibt, wobei anhand von ausgelesenen Sensordaten Positionen der Objektkante ermittelt werden.

Es ist eine Aufgabe der Erfindung, mit einfachen Mitteln eine genauere und zuverlässigere Vermessung von geförderten Objekten zu ermöglichen.

Die Lösung der Aufgabe erfolgt durch ein Verfahren mit den Merkmalen des Anspruchs 1.

Bei einem erfindungsgemäßen Verfahren ist unter anderem vorgesehen, dass
(a) mittels eines optoelektronischen Sensors eine Objektkante eines geförderten Objekts an einer Prüfposition erfasst wird,
(b) bei Erfassung der Objektkante an der Prüfposition ein Auslösesignal an wenigstens zwei weitere optoelektronische Sensoren ausgegeben wird, welche zumindest in Förderrichtung ortsauflösend sind und zumindest quer zur Förderrichtung voneinander beabstandet angeordnet sind,
(c) bei oder nach Empfang des Auslösesignals Sensordaten der zumindest in Förderrichtung ortsauflösenden optoelektronischen Sensoren ausgelesen werden,
(d) anhand der ausgelesenen Sensordaten jeweilige Positionen der Objektkante ermittelt werden, und
(e) anhand der ermittelten Positionen der Objektkante eine Ausrichtung der Objektkante relativ zur Förderrichtung ermittelt wird.

Durch das Auslösesignal können alle Eingänge synchronisiert starten. Die Sensordaten der wenigstens zwei ortsauflösenden Sensoren können also gerade dann ausgelesen werden, wenn sich die Objektkante in den zugehörigen Sichtbereichen befindet. Die Ermittlung zweier Kantenpositionen an unterschiedlichen Stellen entlang des Kantenverlaufs ermöglicht es, die Ausrichtung der Objektkante und somit des gesamten Objekts zu ermitteln. Insbesondere kann eine Schräglage und/oder eine Formabweichung eines geförderten Objekts erkannt und bei der Vermessung berücksichtigt werden.

Die Ermittlung der Ausrichtung der Objektkante kann mit der Ermittlung der Länge des Objekts in einem gemeinsamen Vermessungsprozess vorteilhaft kombiniert werden.

In Schritt (e) kann die Ausrichtung der Objektkante relativ zur Förderrichtung anhand einer linearen Regression ermittelt werden. Somit können punktuelle Abweichungen von der vorgegebenen Kantengeometrie durch Mittelung kompensiert werden.

Die Erfindung sieht vor, dass in Schritt (b) das Auslösesignal ferner an einen zumindest quer zur Förderrichtung ortsauflösenden optoelektronischen Sensor ausgegeben wird, der im Bereich einer Seitenkante des geförderten Objekts angeordnet ist, wobei mittels des zumindest quer zur Förderrichtung ortsauflösenden optoelektronischen Sensors die Position der Seitenkante ermittelt wird und anhand der Position der Seitenkante eine Form des Objekts ermittelt wird. Dadurch ist zusätzlich zur Ausrichtung der Vorderkante oder Hinterkante auch die Ausrichtung der Seitenkante des Objekts ermittelbar. Somit ist auch eine Unterscheidung zwischen Lageabweichungen und Formabweichungen möglich. Die Position der Seitenkante kann während des Hindurchförderns des Objekts durch den Erfassungsbereich des zumindest quer zur Förderrichtung ortsauflösenden optoelektronischen Sensors erfolgen, sodass auch punktuelle Abweichungen der Linearität der Seitenkante erkennbar sind.

Anhand der Position der Seitenkante kann bei einer Ausführungsform zusätzlich eine Ausrichtung des Objekts ermittelt werden.

Bei einer Ausführungsform der Erfindung ist vorgesehen, dass
(i) mittels eines ersten optoelektronischen Sensors eine erste Objektkante eines geförderten Objekts an einer ersten Messposition erfasst wird,
(ii) mittels eines zweiten optoelektronischen Sensors, der zumindest in Förderrichtung ortsauflösend ist, die erste Objektkante oder eine zweite Objektkante des geförderten Objekts an einer zweiten Messposition erfasst wird, die in Förderrichtung von der ersten Messposition beabstandet ist,
(iii) ein Zeitunterschied zwischen dem Erfassen der ersten Objektkante an der ersten Messposition und dem Erfassen der in Schritt (ii) erfassten Objektkante an der zweiten Messposition ermittelt wird,
(iv) eine Durchlaufzeit ermittelt wird, in welcher sich die in Schritt (ii) erfasste Objektkante durch eine vorbestimmte, in Förderrichtung verlaufende Messstrecke des zweiten optoelektronischen Sensors hindurchbewegt,
(v) anhand der Durchlaufzeit und einer Länge der Messstrecke die Objektgeschwindigkeit ermittelt wird, mit welcher sich das geförderte Objekt in der Förderrichtung bewegt, und
(vi) anhand des ermittelten Zeitunterschieds und der ermittelten Objektgeschwindigkeit die Länge des Objekts ermittelt wird.

Es kann also ein in Förderrichtung ortsauflösender optoelektronischer Sensor dazu eingesetzt werden, die Objektgeschwindigkeit zu ermitteln. Es ist dann nicht erforderlich, die Objektgeschwindigkeit mittels einer übergeordneten Steuereinrichtung aus Erfassungszeitpunkten verschiedener Einzelsensoren abzuleiten. Anhand der durch die Messstrecke laufenden Objektkante ist die Objektgeschwindigkeit einfach und schnell zu ermitteln. Es hat sich herausgestellt, dass hierdurch auch unter schwierigen Bedingungen eine präzise Längenmessung möglich ist. Besonders eignet sich diese Ausführungsform für Objekte mit klar erkennbaren Objektkanten, wie zum Beispiel Platten, Blöcke, Rohre oder Behälter. Bei der Messstrecke kann es sich um den kompletten Sichtbereich des ortsauflösenden optoelektronischen Sensors handeln, also zum Beispiel um die komplette Zeilenlänge eines in Förderrichtung ausgerichteten Zeilensensors.

Gemäß einer Ausführungsform der Erfindung wird in Schritt (i) als erste Objektkante eine Hinterkante des geförderten Objekts an der ersten Messposition erfasst und/oder in Schritt (ii) eine Vorderkante des geförderten Objekts an der zweiten Messposition erfasst. Insbesondere bei vergleichsweise langen Objekten kann dadurch der Betrag des in Schritt (iii) zu ermittelnden Zeitunterschieds minimiert werden, was im Sinne der Messgenauigkeit günstig ist. Unter dem Begriff "Vorderkante" ist eine in Förderrichtung vorauslaufende Objektkante zu verstehen, während unter dem Begriff "Hinterkante" eine in Förderrichtung nachlaufende Objektkante zu verstehen ist. Bei der in Schritt (i) genannten "ersten Objektkante" handelt es sich also nicht notwendigerweise um die in Förderrichtung vorauslaufende Objektkante.

Das Ermitteln des Zeitunterschieds in Schritt (iii) kann umfassen, dass beim Erfassen der ersten Objektkante an der ersten Messposition ein Auslösesignal von dem ersten optoelektronischen Sensor an den zweiten optoelektronischen Sensor ausgegeben wird, das einen internen Takt des zweiten optoelektronischen Sensors in Gang setzt. Der interne Takt kann nachfolgend als zeitliches Bezugssystem für die gesamte Vermessung herangezogen werden. Die Vermessung ist somit unabhängig von zusätzlichen Zeitangaben externer Vorrichtungen. Insbesondere ist die Synchronisierung der einzelnen Systemkomponenten erleichtert. Ein besonderer Vorteil besteht darin, dass viele optoelektronische Sensoren ohnehin mit einem relativ hochfrequenten internen Takt, beispielsweise im Megahertz-Bereich, ausgestattet sind, der zusätzlich für eine präzise Zeitmessung genutzt werden kann. Der interne Takt kann durch einen Quarzbaustein auf einem Chip des zweiten optoelektronischen Sensors definiert sein.

Der Zeitunterschied kann in einfacher Weise anhand der bis zum Erfassen der in Schritt (ii) erfassten Objektkante an der zweiten Messposition verstrichenen Zyklen des Takts ermittelt werden. Bei einem internen Takt im Megahertz-Bereich ergibt sich eine zeitliche Auflösung im Mikrosekunden-Bereich.

Eine weitere Ausführungsform der Erfindung sieht vor, dass in Schritt (vi) die Länge des Objekts ferner anhand des Abstands zwischen der ersten Messposition und der zweiten Messposition ermittelt wird. Dieser Abstand ist im Allgemeinen aufgrund der Montagepositionen der optoelektronischen Sensoren vorgegeben. In dem Fall, dass in Schritt (i) eine Hinterkante des geförderten Objekts an der ersten Messposition erfasst und in Schritt (ii) eine Vorderkante des geförderten Objekts an der zweiten Messposition erfasst wird, kann die Länge des Objekts dadurch ermittelt werden, dass das Produkt aus dem in Schritt (iii) ermittelten Zeitunterschied und der in Schritt (v) ermittelten Objektgeschwindigkeit von dem Abstand zwischen der ersten Messposition und der zweiten Messposition subtrahiert wird. Der Abstand zwischen der ersten Messposition und der zweiten Messposition kann auf die Förderrichtung bezogen sein.

Es kann vorgesehen sein, dass zur Kalibrierung ein Objekt bekannter Länge gefördert wird und der Abstand zwischen der ersten Messposition und der zweiten Messposition anhand der bekannten Länge ermittelt oder angepasst wird. Dadurch können die Anforderungen an die Montagegenauigkeit herabgesetzt werden. Beispielsweise kann zur Kalibrierung ein Vergleich der bekannten Länge mit der in Schritt (vi) ermittelten Länge vorgenommen werden. Das Objekt bekannter Länge kann ein Rasterblech oder dergleichen sein. Grundsätzlich könnte eine Kalibrierung auch anhand einer Vermessung eines Objekts mit einem alternativen Messsystem durchgeführt werden.

Gemäß einer speziellen Ausgestaltung wird in Schritt (i) die erste Objektkante mittels einer Lichtschranke an der ersten Messposition erfasst. Dies ist nicht nur einfach und kostengünstig, sondern auch robust gegenüber rauen und wechselnden Umgebungsbedingungen. Eine Lichtschranke mit einem an das Objekt angepassten Strahldurchmesser ist hierbei hinsichtlich der Messgenauigkeit von Vorteil. Grundsätzlich könnte in Schritt (i) die erste Objektkante auch mittels eines Zeilensensors oder einer Kamera an der ersten Messposition erfasst werden.

Die in Schritt (ii) zu erfassende Objektkante kann mittels einer Kamera an der zweiten Messposition erfasst werden. Eine vorteilhafte Ausgestaltung sieht dagegen vor, dass die in Schritt (ii) zu erfassende Objektkante mittels eines Zeilensensors an der zweiten Messposition erfasst wird. Ein Zeilensensor ist in der Regel einfacher zu montieren und einzurichten sowie unempfindlicher gegenüber Fremdlicht.

Es kann vorgesehen sein, dass mittels wenigstens eines weiteren optoelektronischen Sensors, der gemeinsam mit dem ersten und dem zweiten optoelektronischen Sensor an einem Grundgestell des Objektförderers befestigt ist, Positionsmarkierungen eines von dem Grundgestell separaten Bezugsmaßstabs erfasst und bei der Ermittlung der Länge des Objekts berücksichtigt werden. Auf diese Weise ist es möglich, Längenausdehnungen von Komponenten des Objektförderers zu kompensieren und so die Messgenauigkeit zu steigern. Bei dem weiteren optoelektronischen Sensor kann es sich um einen Zeilensensor handeln. Vorzugsweise sind wenigstens zwei weitere optoelektronische Sensoren zur Erfassung von Positionsmarkierungen des Bezugsmaßstabs vorgesehen, welche in Förderrichtung voneinander beabstandet sind.

Der Bezugsmaßstab kann einen sich in der Förderrichtung erstreckenden Stab aus einem Material mit geringem Ausdehnungskoeffizienten umfassen, auf welchen die Positionsmarkierungen aufgebracht sind. Gemäß einer speziellen Ausgestaltung ist der Bezugsmaßstab aus Quarzglas gefertigt, das eine besonders geringe thermische Ausdehnung aufweist.

Der Bezugsmaßstab kann schwimmend gelagert sein, damit er von Längenausdehnungen der Halterungskomponenten unbeeinflusst ist. Insbesondere kann der Bezugsmaßstab in und/oder entgegen der Förderrichtung verschiebbar gelagert sein. Um die Verschiebbarkeit auf eine Richtung zu begrenzen, kann ein Anschlag vorgesehen sein. Zum Beispiel kann der Bezugsmaßstab durch Auflagen gestützt sein, die am Boden oder am Grundgestell des Objektförderers befestigt sind.

Um die Vermessung verschieden langer Objekte zu erleichtern, kann wenigstens ein weiterer optoelektronischer Sensor vorgesehen sein, der zumindest in Förderrichtung ortsauflösend ist und der in Förderrichtung vor oder hinter dem zweiten optoelektronischen Sensor angeordnet ist.

Die vorliegende Offenbarung betrifft auch eine Vorrichtung zur Vermessung von Objekten, die mittels eines Objektförderers in einer Förderrichtung gefördert werden, mit einem ersten optoelektronischen Sensor, einem zweiten optoelektronischen Sensor, der zumindest in Förderrichtung ortsauflösend ist, und einer elektronischen Steuereinrichtung, die mit dem ersten optoelektronischen Sensor und dem zweiten optoelektronischen Sensor in Signalverbindung steht, wobei die Vorrichtung zur Durchführung eines wie vorstehend beschrieben gestalteten Verfahrens ausgebildet ist.

Es kann wenigstens ein Reflektor bezüglich des geförderten Objekts dem ersten optoelektronischen Sensor und/oder dem zweiten optoelektronischen Sensor gegenüberliegend an dem Objektförderer angeordnet sein. Hierdurch wird eine Kontrastverstärkung erzielt und die Robustheit der Vorrichtung gegenüber Verschmutzungen und dergleichen erhöht. Gemeinsam mit dem zugehörigen optoelektronischen Sensor kann der Reflektor eine Reflexionslichtschranke bilden.

Der erste optoelektronische Sensor und der zweite optoelektronische Sensor können jeweilige optische Achsen aufweisen, die schräg nach oben oder schräg nach unten ausgerichtet sind. Dies verbessert die Messgenauigkeit, weil nur die Oberseite oder Unterseite der Objektkante erfasst wird. Schräg nach oben oder schräg nach unten bedeutet im vorliegenden Text, dass die jeweilige optische Achse weder exakt vertikal noch exakt horizontal ausgerichtet ist.

Die Vorrichtung kann ferner umfassen:
wenigstens einen weiteren zumindest in Förderrichtung ortsauflösenden optoelektronischen Sensor, der in Förderrichtung von dem zweiten optoelektronischen Sensor beabstandet ist, und
wenigstens zwei zumindest quer zur Förderrichtung ortsauflösende optoelektronische Sensoren, die quer zur Förderrichtung voneinander beabstandet sind.

Mit einer solchen Anordnung können sämtliche Kanten eines plattenförmigen Objekts vermessen werden.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine Draufsicht auf eine Vorrichtung zur Vermessung von Objekten, bei der die Erfindung nicht sichtbar ist.
- Fig. 2: zeigt die Vorrichtung gemäß Fig. 1 in einer Teilansicht von der Seite.
- Fig. 3: zeigt vereinfacht eine gemäß einer Ausführungsform der Erfindung gestaltete Vorrichtung zur Vermessung von Objekten, die zur Durchführung eines gemäß einer Ausführungsform der Erfindung gestalteten Verfahrens ausgebildet ist.
- Fig. 4: zeigt die Vermessung eines von einer Idealform abweichenden Objekts mittels der in Fig. 3 gezeigten Vorrichtung.

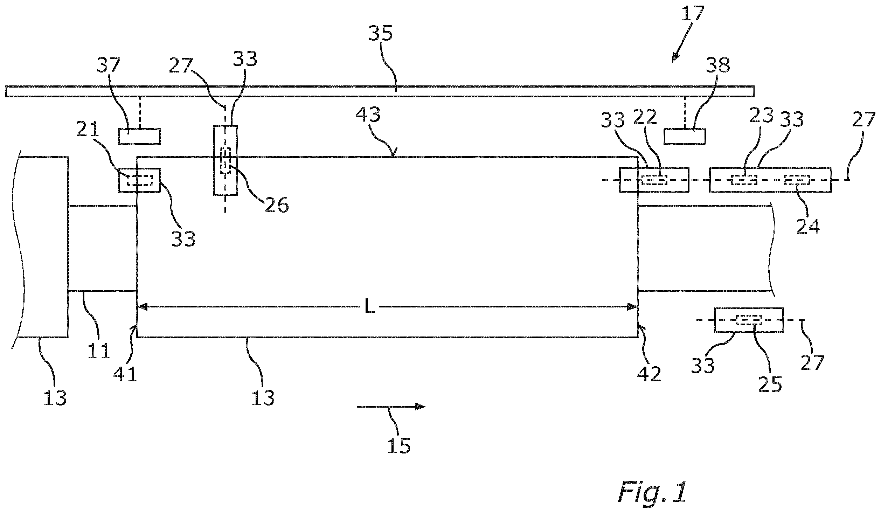

In Fig. 1 ist ein Objektförderer 11 schematisch gezeigt, mittels welchem ein Strom von aufeinanderfolgenden Objekten 13, hier beispielsweise mehrere Meter lange Platten, in einer Förderrichtung 15 gefördert wird. Der Objektförderer 11 kann je nach Anwendung z. B. ein Rollen-, Ketten- oder Bandförderer sein. Eine an dem Objektförderer 11 vorgesehene Objektvermessungs-Vorrichtung 17 dient dazu, während des Förderns die Länge der Objekte 13 zu ermitteln, wie nachfolgend genauer ausgeführt wird.

Die Objektvermessungs-Vorrichtung 17 umfasst mehrere optoelektronische Sensoren, nämlich einen als Lichtschranke ausgeführten Trigger-Sensor 21, vier als Zeilensensoren ausgeführte Vorderkanten-Sensoren 22, 23, 24, 25 sowie einen als Zeilensensor ausgeführten Seitenkanten-Sensor 26. Ein Zeilensensor weist einen langgestreckten lichtempfindlichen Bereich auf. Beispielsweise kann ein Zeilensensor eine Fotodioden-Zeile oder ein eindimensionales oder zweidimensionales CCD-Array oder CMOS-Array umfassen. Auch auf Grundlage eines PSD (position sensitive device) könnte ein Zeilensensor gebildet sein.

Der Trigger-Sensor 21, die Vorderkanten-Sensoren 22, 23, 24, 25 und der Seitenkanten-Sensor 26 sind jeweils derart an einem nicht dargestellten Grundgestell des Objektförderers 11 angebracht, dass die Objekte 13 durch die Sensorsichtfelder gefördert werden. Wie gezeigt sind die Vorderkanten-Sensoren 22, 23, 24, 25 und der Seitenkanten-Sensor 26 in Förderrichtung 15 von dem Trigger-Sensor 21 nach vorn beabstandet. Weiterhin verlaufen die Zeilenachsen 27 der Vorderkanten-Sensoren 22, 23, 24, 25 in der Draufsicht in Förderrichtung 15, während die Zeilenachse 27 des Seitenkanten-Sensors 26 quer zur Förderrichtung 15 verläuft. Der im Bild unten befindliche Vorderkanten-Sensor 25 ist quer zur Förderrichtung 15 von den übrigen Vorderkanten-Sensoren 22, 23, 24 beabstandet.

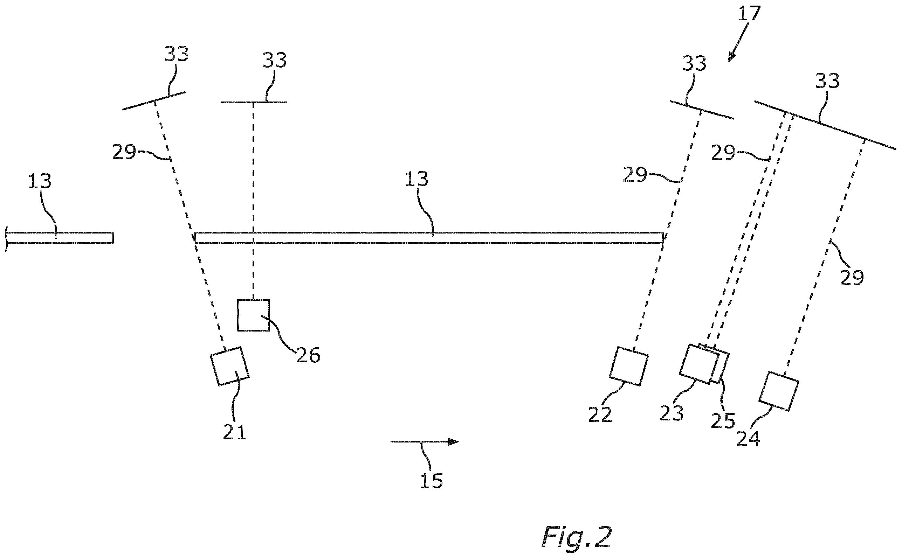

Wie in Fig. 2 erkennbar sind die optischen Achsen 29 des Trigger-Sensors 21 und der Vorderkanten-Sensoren 22, 23, 24, 25 nicht exakt vertikal ausgerichtet, sondern leicht schräg, beispielsweise mit einer Winkelabweichung von 5° bis 20° zur Vertikalen. Dadurch wird von den Sensoren stets nur die Unterseite der Objekte 13 erfasst. Für eine Kontrastverstärkung sind dem Trigger-Sensor 21, den Vorderkanten-Sensoren 22, 23, 24, 25 und dem Seitenkanten-Sensor 26 nach Art einer Reflexionslichtschranke jeweilige Reflektoren 33 zugeordnet, welche am Grundgestell des Objektförderers 11 oder an einem Gebäudeteil befestigt sind.

Die Objektvermessungs-Vorrichtung 17 umfasst ferner einen Stab 35 aus Quarzglas, auf den nicht dargestellte Positionsmarkierungen aufgebracht sind. Der Stab 35 dient als Bezugsmaßstab und ist vom Grundgestell des Objektförderers 11 getrennt schwimmend gelagert. Zwei als Zeilensensoren ausgeführte Referenz-Sensoren 37, 38 sind derart am Grundgestell des Objektförderers 11 befestigt, dass sie die Positionsmarkierungen des Stabs 35 erfassen können.

Eine nicht dargestellte elektronische Steuereinrichtung der Objektvermessungs-Vorrichtung 17 steht mit dem Trigger-Sensor 21, den Vorderkanten-Sensoren 22, 23, 24, 25 dem Seitenkanten-Sensor 26 und den Referenz-Sensoren 37, 38 in Signalverbindung.

Wenn während des Betriebs des Objektförderers 11 die Hinterkante 41 eines Objekts 13 durch den Trigger-Sensor 21 erfasst wird, gibt dieser ein Auslösesignal an die Vorderkanten-Sensoren 22, 23, 24, 25 aus. Diese starten daraufhin jeweils ihren internen Takt. Insbesondere setzen sie jeweils ihr Bezugssystem auf den Auslösezeitpunkt und beziehen nachfolgend alle Messungen auf den betreffenden Takt. Je nachdem, welche nominelle Länge das Objekt 13 aufweist, wird der in Förderrichtung 15 hintere Vorderkanten-Sensor 22, der in Förderrichtung 15 vordere Vorderkanten-Sensor 24 oder der dazwischen befindliche Vorderkanten-Sensor 23 zur Erfassung der Vorderkante 42 des Objekts 13 eingesetzt. Als Bezugspunkt für die Erfassung der Vorderkante 42 kann beispielsweise der Zeilenanfang oder die Zeilenmitte des betreffenden Vorderkanten-Sensors 22, 23, 24 gewählt werden.

Anhand des internen Takts wird mittels der elektronischen Steuereinrichtung ein Zeitunterschied zwischen dem Erfassen der Hinterkante 41 durch den Trigger-Sensor 21 und dem Erfassen der Vorderkante 42 durch den betreffenden Vorderkanten-Sensor 22, 23, 24 ermittelt. Dies kann in einfacher Weise durch Auszählen der Taktzyklen erfolgen. Weiterhin wird mittels des betreffenden Vorderkanten-Sensors 22, 23, 24 die Durchlaufzeit ermittelt, in welcher sich die Vorderkante 42 durch eine vorbestimmte Messstrecke, z. B. durch den gesamten Sichtbereich des Vorderkanten-Sensors 22, 23, 24 hindurchbewegt. Mittels Division der bekannten Länge der Messstrecke durch die Durchlaufzeit ermittelt die elektronische Steuereinrichtung die Objektgeschwindigkeit, mit welcher sich das geförderte Objekt 13 in der Förderrichtung 15 bewegt.

Anhand des ermittelten Zeitunterschieds und der ermittelten Objektgeschwindigkeit sowie des bekannten Abstands zwischen den Erfassungspositionen wird dann die Länge L des Objekts 13, das heißt dessen Ausdehnung in Förderrichtung 15, ermittelt. Speziell ergibt sich die Länge L durch Subtraktion des Produkts aus Zeitunterschied und Objektgeschwindigkeit vom Abstand zwischen den Erfassungspositionen.

In Fig. 1 ist erkennbar, dass zwei der Vorderkanten-Sensoren 23, 25 in Förderrichtung 15 im Wesentlichen den gleichen Abstand zum Trigger-Sensor 21 aufweisen und quer zur Förderrichtung 15 voneinander beabstandet sind, so dass sie gleichzeitig die Position der Vorderkante 42 an verschiedenen Stellen entlang deren Verlauf erfassen können. Dadurch kann eine mögliche Schräglage der Vorderkante 42 erkannt werden. Eine mögliche Schräglage der Seitenkante 43 des Objekts 13 kann hingegen mittels des quer zur Förderrichtung 15 ausgerichteten Seitenkanten-Sensors 26 ermittelt werden. Bei einer Schräglage ändert sich die Position der Seitenkante 43 nämlich während ihres Durchlaufs.

Um mögliche Messverfälschungen aufgrund einer thermischen Ausdehnung oder Kontraktion der Vorrichtungsbauteile zu verhindern, werden die Positionsmarkierungen des Stabs 35 mittels der Referenz-Sensoren 37, 38 erfasst und mit der ermittelten Länge L verrechnet.

Eine Kalibrierung der Objektvermessungs-Vorrichtung 17 kann dadurch vorgenommen werden, dass ein Objekt 13 bekannter Länge, beispielsweise ein Rasterblech, mittels des Objektförderers 11 gefördert wird und die Rechnung entsprechend angepasst wird.

Grundsätzlich könnten die Vorderkanten-Sensoren 22, 23, 24, 25 der Seitenkanten-Sensor 26 sowie die Referenz-Sensoren 37, 38 auch als Kameras ausgeführt sein. Zeilensensoren sind in der Regel jedoch kostengünstiger, leichter einzurichten und unempfindlicher gegenüber Fremdlicht.

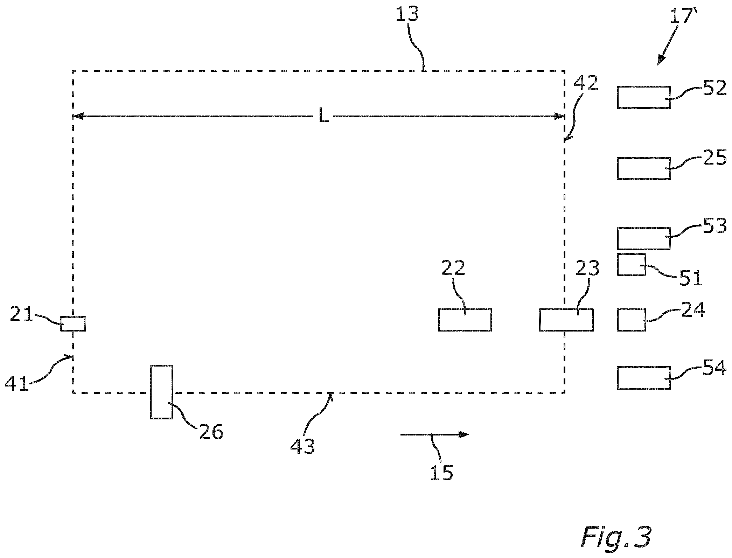

In Fig. 3 ist eine Ausführungsform einer erfindungsgemäßen Objektvermessungs-Vorrichtung 17' dargestellt. Diese umfasst vorzugsweise die gleichen zur Ermittlung der Länge L des Objekts 13 vorgesehenen Komponenten wie die in Fig. 2 gezeigte Objektvermessungs-Vorrichtung 17, insbesondere einen als Lichtschranke ausgeführte Trigger-Sensor 21, vier als Zeilensensoren ausgeführte Vorderkanten-Sensoren 22, 23, 24, 25 sowie einen als Zeilensensor ausgeführten Seitenkanten-Sensor 26. Zusätzlich umfasst die in Fig. 3 gezeigte Objektvermessungs-Vorrichtung 17' jedoch noch einen weiteren als Lichtschranke ausgeführten Trigger-Sensor 51 sowie drei in Förderrichtung 15 auf gleicher Höhe wie der weitere Trigger-Sensor 51 angeordnete, als Zeilensensoren ausgeführte Ausrichtungs-Sensoren 52, 53, 54. Der weitere Trigger-Sensor 51 ist ebenso wie die Ausrichtungs-Sensoren 52, 53, 54 in Förderrichtung 15 von dem anderen Trigger-Sensor 21 nach vorn beabstandet.

Zur Vermessung eines Objekts 13 wird die Hinterkante 41 des Objekts 13 durch den Trigger-Sensor 21 erfasst. Sobald die Erfassung stattgefunden hat, wird ein Auslösesignal an den weiteren Trigger-Sensor 52 ausgegeben, um ein gemeinsames Bezugssystem für die Längenvermessung und für eine Ausrichtungsvermessung zu schaffen, wobei gegebenenfalls eine Ansprechzeit oder Totzeit zu berücksichtigen ist. Speziell kann der Ausgang des Trigger-Sensors 21 dem Eingang des weiteren Trigger-Sensors 51 zugeführt werden.

Außerdem gibt der weitere Trigger-Sensor 51 ein Auslösesignal zumindest an die Ausrichtungssensoren 52, 53, 54 aus, sobald er die Vorderkante 42 erfasst. Die Vorderkante 42 befindet sich zu diesem Zeitpunkt im Sichtbereich aller Ausrichtungssensoren 52, 53, 54. Bei oder nach Empfang des Auslösesignals von dem weiteren Trigger-Sensor 51 werden Sensordaten der Ausrichtungs-Sensoren 52, 53, 54 ausgelesen. Anhand der ausgelesenen Sensordaten werden jeweilige Positionen der Vorderkante 42 des Objekts 13 ermittelt. Anhand der ermittelten Positionen der Vorderkante 42 wird die Ausrichtung der Vorderkante 42 relativ zur Förderrichtung 15 ermittelt. Speziell wird durch die elektronische Steuereinrichtung der Winkel ermittelt, den die Vorderkante 42 zur Förderrichtung 15 oder zu einer rechtwinklig hierzu verlaufenden Referenzlinie einnimmt. Hierbei kann eine lineare Regression der Positionsdaten der Ausrichtungs-Sensoren 52, 53, 54 vorgenommen werden, um Formabweichungen der Vorderkante 42 zu kompensieren. Es kann aber auch die Art der Formabweichung festgestellt werden. Aufgrund der quer zur Förderrichtung 15 voneinander beabstandeten Ausrichtungs-Sensoren 52, 53, 54 können außerdem unterschiedlich breite Objekte 13 vermessen werden.

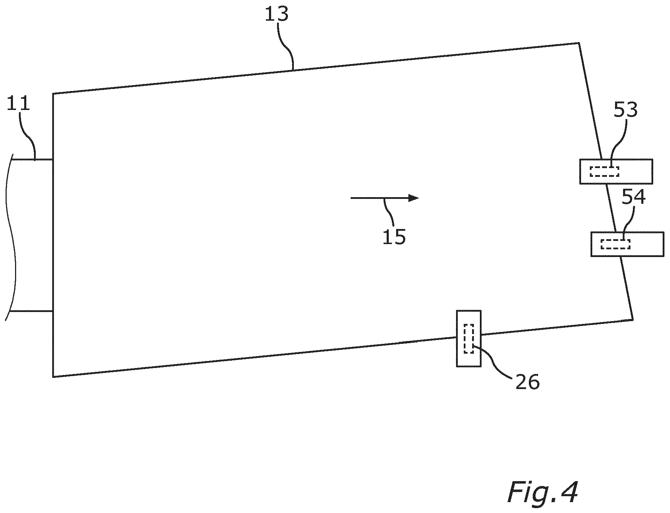

Das Auslösesignal wird ferner an den Seitenkanten-Sensor 26 und optional einem weiteren Sensor der gegenüberliegenden Seite ausgegeben. Bei oder nach Empfang des Auslösesignals wird die Position der Seitenkante 43 ermittelt. Anhand der Änderung der Position der Seitenkante 43 während des Durchlaufs des Objekts 13 wird die Ausrichtung der Seitenkante 43 ermittelt. Dadurch dass sowohl die Ausrichtung der Vorderkante 42 als auch die Ausrichtung der Seitenkante 43 bekannt ist, kann zwischen einer Schräglage eines exakt rechtwinkligen Objekts 13 und einem nicht exakt rechtwinklig geformten Objekt 13 wie in Fig. 4 dargestellt unterschieden werden. Das Prinzip der Kantenerkennung kann auch mit weiteren Sensoren auf die Hinterkante 41 angewendet werden.

Die Ermittlung der Länge L des Objekts 13 erfolgt bei der in Fig. 3 dargestellten Ausführungsform im Übrigen ebenso wie zuvor unter Bezugnahme auf Fig. 1 und 2 beschrieben.

Die Erfindung entfaltet ihre Vorteile insbesondere bei der Förderung von Platten, kann jedoch auch bei Blöcken, Walzen, Rohren, Behältern und ähnlichem Fördergut vorteilhaft zum Einsatz kommen.

### Bezugszeichenliste:

- 11: Objektförderer
- 13: Objekt
- 15: Förderrichtung
- 17, 17`: Objektvermessungs-Vorrichtung
- 21: Trigger-Sensor
- 22: Vorderkanten-Sensor
- 23: Vorderkanten-Sensor
- 24: Vorderkanten-Sensor
- 25: Vorderkanten-Sensor
- 26: Seitenkanten-Sensor
- 27: Zeilenachse
- 29: optische Achse
- 33: Reflektor
- 35: Stab
- 37: Referenz-Sensor
- 38: Referenz-Sensor
- 41: Hinterkante
- 42: Vorderkante
- 43: Seitenkante
- 51: Trigger-Sensor
- 52: Ausrichtungs-Sensor
- 53: Ausrichtungs-Sensor
- 54: Ausrichtungs-Sensor

- L: Länge

## Patentansprüche

1. Verfahren zur Vermessung von Objekten (13), die mittels eines Objektförderers (11) in einer Förderrichtung (15) gefördert werden, wobei
(a) mittels eines optoelektronischen Sensors (51) eine Objektkante (42) eines geförderten Objekts (13) an einer Prüfposition erfasst wird,
(b) bei Erfassung der Objektkante (42) an der Prüfposition ein Auslösesignal an wenigstens zwei weitere optoelektronische Sensoren (52, 53, 54) ausgegeben wird, welche zumindest in Förderrichtung (15) ortsauflösend sind und zumindest quer zur Förderrichtung (15) voneinander beabstandet angeordnet sind,
(c) bei oder nach Empfang des Auslösesignals Sensordaten der zumindest in Förderrichtung (15) ortsauflösenden optoelektronischen Sensoren (52, 53, 54) ausgelesen werden,
(d) anhand der ausgelesenen Sensordaten jeweilige Positionen der Objektkante (42) ermittelt werden, und
(e) anhand der ermittelten Positionen der Objektkante (42) eine Ausrichtung der Objektkante (42) relativ zur Förderrichtung (15) ermittelt wird, vorzugsweise anhand einer linearen Regression,
wobei in Schritt (b) das Auslösesignal ferner an einen zumindest quer zur Förderrichtung (15) ortsauflösenden optoelektronischen Sensor (26) ausgegeben wird, der im Bereich einer Seitenkante (43) des geförderten Objekts (13) angeordnet ist, wobei mittels des zumindest quer zur Förderrichtung (15) ortsauflösenden optoelektronischen Sensors (26) die Position der Seitenkante (43) ermittelt wird und anhand der Position der Seitenkante (43) eine Form des Objekts (13) ermittelt wird.

2. Verfahren nach Anspruch 1,
wobei anhand der Position der Seitenkante (43) eine Ausrichtung des Objekts (13) ermittelt wird.

3. Verfahren nach Anspruch 1 oder 2, wobei
(i) mittels eines ersten optoelektronischen Sensors (21) eine erste Objektkante (41) eines geförderten Objekts (13) an einer ersten Messposition erfasst wird,
(ii) mittels eines zweiten optoelektronischen Sensors (22, 23, 24, 25), der zumindest in Förderrichtung (15) ortsauflösend ist, die erste Objektkante (41) oder eine zweite Objektkante (42) des geförderten Objekts (13) an einer zweiten Messposition erfasst wird, die in Förderrichtung (15) von der ersten Messposition beabstandet ist,
(iii) ein Zeitunterschied zwischen dem Erfassen der ersten Objektkante (41) an der ersten Messposition und dem Erfassen der in Schritt (ii) erfassten Objektkante (41 oder 42) an der zweiten Messposition ermittelt wird,
(iv) eine Durchlaufzeit ermittelt wird, in welcher sich die in Schritt (ii) erfasste Objektkante (41 oder 42) durch eine vorbestimmte, in Förderrichtung (15) verlaufende Messstrecke des zweiten optoelektronischen Sensors (22, 23, 24, 25) hindurchbewegt,
(v) anhand der Durchlaufzeit und einer Länge der Messstrecke die Objektgeschwindigkeit ermittelt wird, mit welcher sich das geförderte Objekt (13) in der Förderrichtung (15) bewegt, und
(vi) anhand des ermittelten Zeitunterschieds und der ermittelten Objektgeschwindigkeit die Länge (L) des Objekts (13) ermittelt wird.

4. Verfahren nach Anspruch 3,
wobei in Schritt (i) eine Hinterkante (41) des geförderten Objekts (13) an der ersten Messposition erfasst wird und/oder in Schritt (ii) eine Vorderkante (42) des geförderten Objekts (13) an der zweiten Messposition erfasst wird.

5. Verfahren nach Anspruch 3 oder 4,
wobei das Ermitteln des Zeitunterschieds in Schritt (iii) umfasst, dass beim Erfassen der ersten Objektkante (41) an der ersten Messposition ein Auslösesignal von dem ersten optoelektronischen Sensor (21) an den zweiten optoelektronischen Sensor (22, 23, 24, 25) ausgegeben wird, das einen internen Takt des zweiten optoelektronischen Sensors (22, 23, 24, 25) in Gang setzt.

6. Verfahren nach Anspruch 5,
wobei der Zeitunterschied anhand der bis zum Erfassen der in Schritt (ii) erfassten Objektkante (42) an der zweiten Messposition verstrichenen Zyklen des Takts ermittelt wird.

7. Verfahren nach zumindest einem der Ansprüche 3 bis 6,
wobei in Schritt (vi) die Länge (L) des Objekts (13) ferner anhand des Abstands zwischen der ersten Messposition und der zweiten Messposition ermittelt wird.

8. Verfahren nach Anspruch 7,
wobei zur Kalibrierung ein Objekt (13) bekannter Länge (L) gefördert wird und der Abstand zwischen der ersten Messposition und der zweiten Messposition anhand der bekannten Länge ermittelt oder angepasst wird.

9. Verfahren nach zumindest einem der Ansprüche 3 bis 8, wobei
in Schritt (i) die erste Objektkante (41) mittels einer Lichtschranke an der ersten Messposition erfasst wird, und/oder
die in Schritt (ii) zu erfassende Objektkante (41) mittels eines Zeilensensors an der zweiten Messposition erfasst wird.

10. Verfahren nach zumindest einem der Ansprüche 3 bis 9,
wobei mittels wenigstens eines weiteren optoelektronischen Sensors (37, 38), der gemeinsam mit dem ersten und dem zweiten optoelektronischen Sensor (21, 22, 23, 24, 25) an einem Grundgestell des Objektförderers (11) befestigt ist, Positionsmarkierungen eines von dem Grundgestell separaten Bezugsmaßstabs (35) erfasst und bei der Ermittlung der Länge (L) des Objekts (13) berücksichtigt werden.

11. Verfahren nach Anspruch 10, wobei
der Bezugsmaßstab einen sich in der Förderrichtung (15) erstreckenden Stab (35) aus einem Material mit geringem Ausdehnungskoeffizienten umfasst, auf welchen die Positionsmarkierungen aufgebracht sind, und/oder der Bezugsmaßstab (35) schwimmend gelagert ist.

## Claims

1. A method of measuring objects (13) which are conveyed in a conveying direction (15) by means of an object conveyor (11), wherein
(a) an object edge (42) of a conveyed object (13) is detected at an inspection position by means of an optoelectronic sensor (51),
(b) on the detection of the object edge (42) at the inspection position, a trigger signal is output to at least two further optoelectronic sensors (52, 53, 54) which are spatially resolving at least in the conveying direction (15) and which are arranged spaced apart from one another at least transversely to the conveying direction (15),
(c) on or after the reception of the trigger signal, sensor data of the optoelectronic sensors (52, 53, 54) which are spatially resolving at least in the conveying direction (15) are read out,
(d) respective positions of the object edge (42) are determined based on the read-out sensor data, and
(e) an orientation of the object edge (42) relative to the conveying direction (15) is determined based on the determined positions of the object edge (42), preferably based on a linear regression, wherein, in step (b), the trigger signal is further output to an optoelectronic sensor (26) which is spatially resolving at least transversely to the conveying direction (15) and which is arranged in the region of a side edge (43) of the conveyed object (13), wherein the position of the side edge (43) is determined by means of the optoelectronic sensor (26) which is spatially resolving at least transversely to the conveying direction (15) and a shape of the object (13) is determined based on the position of the side edge (43).

2. A method according to claim 1,
wherein an orientation of the object (13) is determined based on the position of the side edge (43).

3. A method according to claim 1 or 2, wherein
(i) a first object edge (41) of a conveyed object (13) is detected at a first measurement position by means of a first optoelectronic sensor (21),
(ii) the first object edge (41) or a second object edge (42) of the conveyed object (13) is detected at a second measurement position, which is spaced apart from the first measurement position in the conveying direction (15), by means of a second optoelectronic sensor (22, 23, 24, 25) which is spatially resolving at least in the conveying direction (15),
(iii) a time difference between the detection of the first object edge (41) at the first measurement position and the detection of the object edge (41 or 42) detected in step (ii) at the second measurement position is determined,
(iv) a transit time is determined in which the object edge (41 or 42) detected in step (ii) moves through a predetermined measurement path of the second optoelectronic sensor (22, 23, 24, 25) extending in the conveying direction (15),
(v) the object speed at which the conveyed object (13) moves in the conveying direction (15) is determined based on the transit time and a length of the measurement path, and
(vi) the length (L) of the object (13) is determined based on the determined time difference and the determined object speed.

4. A method according to claim 3,
wherein, in step (i), a rear edge (41) of the conveyed object (13) is detected at the first measurement position and/or, in step (ii), a front edge (42) of the conveyed object (13) is detected at the second measurement position.

5. A method according to claim 3 or 4,
wherein the determination of the time difference in step (iii) comprises a trigger signal being output by the first optoelectronic sensor (21) to the second optoelectronic sensor (22, 23, 24, 25) on the detection of the first object edge (41) at the first measurement position, said trigger signal initiating an internal clock of the second optoelectronic sensor (22, 23, 24, 25).

6. A method according to claim 5,
wherein the time difference is determined based on the cycles of the clock that have elapsed until the detection of the object edge (42) detected in step (ii) at the second measurement position.

7. A method according to at least one of the claims 3 to 6,
wherein, in step (vi), the length (L) of the object (13) is further determined based on the distance between the first measurement position and the second measurement position.

8. A method according to claim 7,
wherein, for the calibration, an object (13) of a known length (L) is conveyed and the distance between the first measurement position and the second measurement position is determined or adapted based on the known length.

9. A method according to at least one of the claims 3 to 8, wherein,
in step (i), the first object edge (41) is detected at the first measurement position by means of a light barrier, and/or
the object edge (41) to be detected in step (ii) is detected at the second measurement position by means of a line sensor.

10. A method according to at least one of the claims 3 to 9,
wherein position markings of a reference scale (35), which is separate from the base frame, are detected by means of at least one further optoelectronic sensor (37, 38), which is fastened together with the first and the second optoelectronic sensor (21, 22, 23, 24, 25) to a base frame of the object conveyor (11), and are considered in the determination of the length (L) of the object (13).

11. A method according to claim 10, wherein
the reference scale comprises a bar (35) which extends in the conveying direction (15), which is composed of a material having a low coefficient of expansion and to which the position markings are applied, and/or the reference scale (35) is floatingly supported.

## Revendications

1. Procédé de mesure d'objets (13) convoyés dans une direction de convoyage (15) au moyen d'un convoyeur d'objets (11), dans lequel
(a) un bord d'objet (42) d'un objet convoyé (13) est détecté à une position de contrôle au moyen d'un capteur optoélectronique (51),
(b) lors de la détection du bord de l'objet (42) à la position de contrôle, un signal de déclenchement est émis vers au moins deux autres capteurs optoélectroniques (52, 53, 54) qui sont à résolution spatiale au moins dans la direction de convoyage (15) et sont disposés à distance l'un de l'autre au moins transversalement à la direction de convoyage (15),
(c) lors de la réception ou après la réception du signal de déclenchement, des données de capteur des capteurs optoélectroniques (52, 53, 54) à résolution spatiale au moins dans la direction de convoyage (15) sont lues,
(d) à l'aide des données de capteur lues, des positions respectives du bord d'objet (42) sont déterminées, et
(e) à l'aide des positions déterminées du bord d'objet (42), une orientation du bord d'objet (42) par rapport à la direction de convoyage (15) est déterminée, de préférence à l'aide d'une régression linéaire,
dans lequel, à l'étape (b), le signal de déclenchement est en outre émis vers un capteur optoélectronique (26) à résolution spatiale au moins transversalement à la direction de convoyage (15), qui est disposé dans la zone d'un bord latéral (43) de l'objet convoyé (13), la position du bord latéral (43) étant déterminée au moyen du capteur optoélectronique (26) à résolution spatiale au moins transversalement à la direction de convoyage (15), et une forme de l'objet (13) étant déterminée à l'aide de la position du bord latéral (43).

2. Procédé selon la revendication 1,
dans lequel une orientation de l'objet (13) est déterminée à l'aide de la position du bord latéral (43).

3. Procédé selon la revendication 1 ou 2, dans lequel
(i) au moyen d'un premier capteur optoélectronique (21), un premier bord d'objet (41) d'un objet convoyé (13) est détecté à une première position de mesure,
(ii) au moyen d'un deuxième capteur optoélectronique (22, 23, 24, 25) à résolution spatiale au moins dans la direction de convoyage (15), le premier bord d'objet (41) ou un deuxième bord d'objet (42) de l'objet convoyé (13) est détecté à une deuxième position de mesure, qui est distante de la première position de mesure dans la direction de convoyage (15),
(iii) une différence de temps est déterminée, qui existe entre la détection du premier bord d'objet (41) à la première position de mesure et la détection du bord d'objet (41 ou 42) détecté à l'étape (ii) à la deuxième position de mesure,
(iv) un temps de passage est déterminé, pendant lequel le bord d'objet (41 ou 42) détecté à l'étape (ii) se déplace à travers un trajet de mesure prédéterminé, s'étendant dans la direction de convoyage (15), du deuxième capteur optoélectronique (22, 23, 24, 25),
(v) à l'aide du temps de passage et d'une longueur du trajet de mesure, la vitesse de l'objet est déterminée, à laquelle l'objet convoyé (13) se déplace dans la direction de convoyage (15), et
(vi) à l'aide de la différence de temps déterminée et de la vitesse d'objet déterminée, la longueur (L) de l'objet (13) est déterminée.

4. Procédé selon la revendication 3,
dans lequel, à l'étape (i), un bord arrière (41) de l'objet convoyé (13) est détecté à la première position de mesure et/ou, à l'étape (ii), un bord avant (42) de l'objet convoyé (13) est détecté à la deuxième position de mesure.

5. Procédé selon la revendication 3 ou 4,
dans lequel la détermination de la différence de temps à l'étape (iii) consiste à, lors de la détection du premier bord d'objet (41) à la première position de mesure, émettre un signal de déclenchement par le premier capteur optoélectronique (21) vers le deuxième capteur optoélectronique (22, 23, 24, 25), qui met en route une horloge interne du deuxième capteur optoélectronique (22, 23, 24, 25).

6. Procédé selon la revendication 5,
dans lequel la différence de temps est déterminée à partir des cycles de l'horloge qui se sont écoulés jusqu'à la détection du bord d'objet (42) détecté à l'étape (ii) à la deuxième position de mesure.

7. Procédé selon l'une au moins des revendications 3 à 6,
dans lequel, à l'étape (vi), la longueur (L) de l'objet (13) est en outre déterminée à l'aide de la distance entre la première position de mesure et la deuxième position de mesure.

8. Procédé selon la revendication 7,
dans lequel, pour l'étalonnage, un objet (13) de longueur (L) connue est convoyé, et la distance entre la première position de mesure et la deuxième position de mesure est déterminée ou adaptée à l'aide de la longueur connue.

9. Procédé selon l'une au moins des revendications 3 à 8,
dans lequel, à l'étape (i), le premier bord d'objet (41) est détecté au moyen d'une barrière lumineuse à la première position de mesure, et/ou le bord d'objet (41) à détecter à l'étape (ii) est détecté au moyen d'un capteur linéaire à la deuxième position de mesure.

10. Procédé selon l'une au moins des revendications 3 à 9,
dans lequel, au moyen d'au moins un autre capteur optoélectronique (37, 38) fixé conjointement avec les premier et deuxième capteurs optoélectroniques (21, 22, 23, 24, 25) sur un châssis de base du convoyeur d'objets (11), des repères de position d'une échelle de référence (35) distincte du châssis de base sont détectés et pris en compte lors de la détermination de la longueur (L) de l'objet (13).

11. Procédé selon la revendication 10, dans lequel l'échelle de référence comprend une barre (35) qui s'étend dans la direction de convoyage (15) et est constituée d'un matériau à faible coefficient de dilatation, sur laquelle les repères de position sont appliqués, et/ou l'échelle de référence (35) est montée de manière flottante.
